# EUROPEAN PATENT APPLICATION

(11) **EP 2 575 131 A1**
(43) Date of publication of application: **03.04.2013**
(21) Application number: 11306268.1
(22) Date of filing: 30.09.2011
(51) Int. Cl.: G11B 27/034, G11B 27/34, G10H 1/36, G11B 27/10

(54) **A method for synchronized music and video dubbing**

(71) Applicant: France Télécom, 75015 Paris (FR)
(72) Inventor: Hegab, Ashraf Samy, LONDRES, SE15 6QX (GB); Chaudhry, Kashif, LONDON, SW16 5SR (GB); Bowers, Chris, SWINDON, SN25 1UP (GB)
(74) Representative: Cabinet Plasseraud

(57) **Abstract**

The invention concerns a method for generating a video, the method being implemented in a device comprising a display and a camera, the camera being oriented in a direction similar to a direction of the display, the device being adapted to display on the display at least one identifier of a music file. The method comprises, upon selection of an identifier of a music file, retrieving lyrics associated to the selected music file, displaying the retrieved lyrics on the display, playing the music file in synchronization with the displayed lyrics, recording a video file while the music file is played and generating a video by merging the captured video file with the music file.

## Description

The present invention generally relates to video recording and processing.

It finds applications, in particular while not exclusively, in electronic devices, such as laptops, personal computers, Smartphones Personal Digital Assistants (PDAs).

A recent trend called "LipDub" consists in using a camera connected to a device such as a laptop or a personal computer, to record a video of a user miming lyrics of songs. Recording of the video can also be performed by a Smartphone or a PDA having an integrated camera (for example front camera). The music file of the real song can then added to the video to give the impression that the recorded user is the actual singer of the song.

Lip Dub is a rich way to communicate and share contents over social networks or content databases. This trend is encouraged by the convergence between mobile devices and personal audio devices, by the emergence of hi-spec mobile devices capable of video recording and with large memory capacities, and by the prevalence of users to share information on social networks serving simultaneously as a one-to-one and one-to-many communications platform.

To add the music file of the original song to the video, the user generally uses video editing software. However, this is not practical to the user, which also will have difficulties to synchronize the music file with the recorded video in which the sung lyrics are mimed. In addition, when the video is recorded on a Smartphone, the user needs to transfer the recorded video on a computer on which appropriate video editing software is installed.

Alternatively, the user can also record the song by playing it on the loudspeakers of his Smartphone while recording of the video. The recorded video is then used for the frames (visual data) and for the soundtrack (audible data). However, it results in decreasing the audio quality level of the video, as the song is displayed and recorded with environment noise and with the limitations of the microphone, which quality is often reduced on mobile devices.

In addition, to efficiently mime the sung lyrics, the user has to look for the written lyrics of the song, on the Internet for example, which requires a long time for the user to prepare the LipDub before recording a video.

Thus, there is a need to enable recording a Lip Dub video with a satisfying audio quality level and without encumbering the user with complex manipulations.

To address these needs, a first aspect of the invention relates to a method for generating a video, the method being implemented in a device comprising a display and a camera, the camera being oriented in a direction similar to a direction of the display, the device being adapted to display on the display at least one identifier of a music file, the method comprising:
- upon selection of an identifier of a music file, retrieving lyrics associated with the selected music file;
- displaying the retrieved lyrics on the display ;
- playing the music file in synchronization with the displayed lyrics;
- recording a video file while the music file is played;
- generating a video by merging the captured video file with the music file.

Thus, the present invention enables to generate a video that comprises the frames of a recorded video of the user lip singing on the played selected music file and which soundtrack is the selected music file. Thus, the audio quality level is the quality level of the music file and is not deteriorated by ambient noise and generating the video does not require manipulations from the user.

According to some embodiments, the identifier of a music file is selected among a list of identifiers of music files that are stored on the device.

These embodiments enable to choose a music file among music files that are stored on the device. Being given the great memory capabilities of communication devices, this enables the user to select a pre-stored song, without having to download it in real time on the Internet.

Alternatively, the identifier of a music file is selected among a list of identifiers of music files that are stored on a remote server.

This enables to access to a larger list of music files that can be stored on a remote server such as a music store for example.

In complement, the remote server further stores lyrics in association with each of the stored music files and wherein retrieving lyrics associated to the selected music file comprises:
- sending the selected identifier of the music file to the remote server;
- receiving said music file from the remote sever;
- receiving lyrics associated with the music file from the remote server.

This enables the user to avoid searching by himself the lyrics on the Internet or to store them on his device. By selecting a music file in the list, the remote server can deduce the associated lyrics so that the device can receive both the music file and the associated lyrics, which is convenient for the user.

According to some embodiments of the invention, selection of an identifier of a music file comprises selecting a portion of the music file, the retrieved lyrics are associated with the portion and only the portion of the music file is displayed in synchronization with the displayed lyrics.

These embodiments enable the user to select only a relevant portion of a music file to record a LipDub. For example, the user can select only the chorus of a song. By establishing a correspondence between the portion, which can be identified by a start time and a duration, the device can retrieve the corresponding lyrics. This can be performed whether by transmitting the start time and the duration to the remote server, which is adapted to deduce the relevant part of the lyrics, or by determining a relevant part of lyrics that are locally stored in the device.

A second aspect of the invention concerns a computer program product recorded on a storage medium and executable by a computer in the form of a software agent including at least one software module setup to implement the method according to any one of the embodiments of the first aspect of the invention.

A third aspect of the invention refers to a device for generating a video comprising a display, loudspeakers and a camera, the camera being oriented in a direction similar to a direction of the display, the device being adapted to display on the display at least one identifier of a music file, and further comprising:
- a retrieving unit for retrieving, upon selection of an identifier of a music file on the display, lyrics associated with the selected music file;

The display can be adapted to display the retrieved lyrics on the display, the loudspeakers can be adapted to play the music file in synchronization with the displayed lyrics, and the camera can adapted to record a video file while the music file is played. The device further can further comprise a generating unit for generating a video by merging the captured video file with the music file.

In complement, the device may further comprise a music database storing a list of music files and the selected identifier of the music file may be selected among a list of identifier of the stored music files.

In complement, the device further comprises a browsing unit for transmitting the selected identifier of the music file to a remote server and the lyrics and the music file are received by the retrieving unit from the remote server.

According to some embodiments, the device is a Smartphone and the camera is a front camera.

This enables to introduce the present invention in pre-existing devices, without structural modification of it, because of recent Smartphones already comprise a front camera.

A fourth aspect of the invention relates to a system for generating a video comprising a remote server and a device, the device comprising a display, loudspeakers and a camera, the camera being oriented in a direction similar to a direction of the display, the device being adapted to display on the display at least one identifier of a music file. The device further comprises:
- a retrieving unit for retrieving from the remote server, upon selection of an identifier of a music file on the display, lyrics associated with the selected music file;

The display may be adapted to display the retrieved lyrics on the display, the loudspeakers may be adapted to play the music file in synchronization with the displayed lyrics, and the camera may be adapted to record a video file while the music file is played. The device may further comprise a generating unit for generating a video by merging the captured video file with the music file.

In complement, the device further comprises a music database storing a list of music files and the selected identifier of the music file is selected among a list of identifier of the stored music files.

Alternatively, the remote server further stores lyrics in association with each of the stored music files, the device further comprises a browsing unit for transmitting the selected identifier of the music file to a remote server and the remote server is adapted to retrieve the music file and its associated lyrics to the device.

The present invention is illustrated by way of example, and not by way of limitation, in the figures of the accompanying drawings, in which like reference numerals refer to similar elements and in which:
- Figure 1 represents system for generating a video according to some embodiments of the invention;
- Figure 2 represents a device for generating a video according to some embodiments of the invention;
- Figure 3 represents a flowchart representing the steps of a method according to some embodiments of the invention;

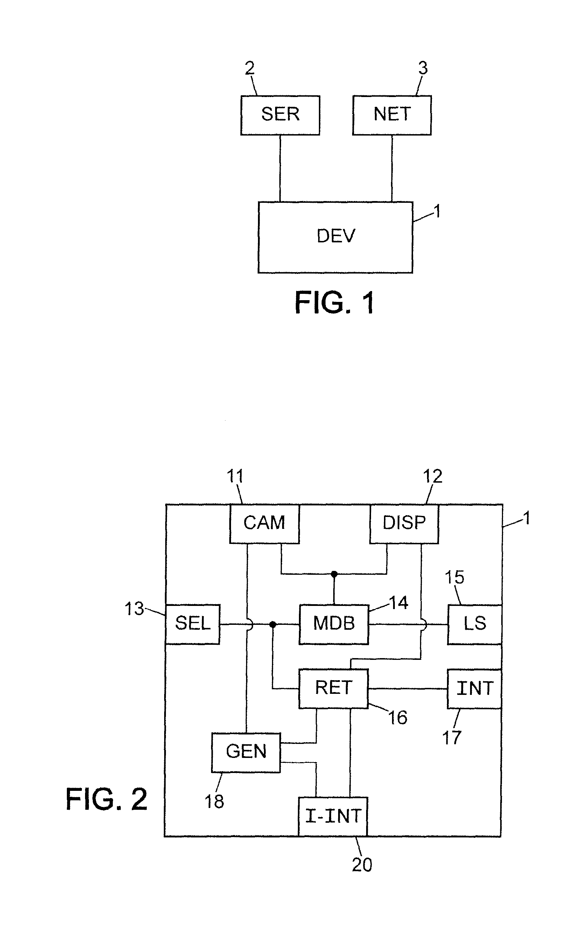

Referring to Figure 1, there is shown a system for generating a video according to some embodiments of the invention.

The system comprises a device 1, a remote server 2 and a network 3. For example, the device 1 can be a laptop, a personal computer or a mobile communication device such as a Smartphone or a PDA. In what follows, we consider that the device 1 is a Smartphone. The remote server 2 can for example be a music store and can comprise library including music files. Music files can correspond to a whole song, identified by a name of an artist and a name of the song. The remote server 2 can also provide portions of a song, which can be identified by a start time and a duration. According to some embodiments, the library can also comprise lyrics, each lyrics being stored in association with a music file. The remote server 2 can be accessed by the device 1 and some contents of the remote server 2 can be transmitted to the remote server 2. The network 3 can be any network on which a video can be uploaded, such as the Internet for example, via Youtube™, Facebook™, Twitter™ or any personal Internet website.

The architecture of the Smartphone 1 is illustrated with reference to Figure 2.

The Smartphone 1 comprises a camera 11 and a display 12. For example, the considered camera is the front camera of the Smartphone 1. Recent Smartphones usually include a front camera so that the present invention does not require any structural modification of the existing architectures and can be easily implemented.

The Smartphone 1 further comprises a selection unit 13, such as a user interface to interact with the user. The selection unit 13 can for example be a keyboard or the display 12 can be a touchscreen so that the display and the selection unit are merged.

By using the display 12 and the selection unit 13, the user of the Smartphone can access to a music database 14, which is stored on the Smartphone, and which can comprise songs, song portions and associated lyrics for example. This data can have been downloaded from the remote server 2. Indeed, by using the display 12 and the selection unit 13, the user of the Smartphone can also access the remote server 2 via a retrieving unit 16 connected to the remote server 2 via a first interface 17. However, instead of browsing a list of music files that are stored in the music database 14, which is local to the Smartphone 2, the Smartphone 1 can browse lists of available music files, which are available on the remote server 2, and which are stored with associated lyrics. To this purpose, a dedicated application, named "LipDub" application for example, can be installed on the Smartphone 1.

When an identifier of a music file is selected, the display can propose the user to select a portion of the music file he would like to select. The user can then select the whole music file or only his favourite part, which can be the chorus of the music file for example.

The music database 14 and the browsing unit 16 are both connected to loudspeakers 15 so that the music file can be played and to the display, so that the lyrics can be displayed in synchronization with the music file.

According to a first embodiment, an identifier of the music file (or song) that is selected by the user is an identifier of a music file that is stored in the music database 14 of the phone. The music database 14 can also store the associated lyrics. Alternatively, the music database 14 does not comprise the lyrics, which can be retrieved by the browsing unit 16 from the server 2, by transmitting a request to the server, the request containing an identifier of the music file. The request can further contain a start time and a duration when the user has only selected a given portion of the music file. Based on the identifier of the music file, the remote server 2 can deduce its associated lyrics and transmit it to the browsing unit 16 via the first interface 17. When only a portion of the music file has been selected, the remote server 2 establishes a correspondence between the selected portion and a relevant part of the lyrics. The browsing unit 16 can then display the retrieved lyrics in synchronization with the selected music file or can store the lyrics in the music database 14. According to a second embodiment, the music file is selected by the user by directly accessing to the remote server 2 and by browsing the library of songs that are available in a "LipDub" section of the music store for example. Then, as in the first embodiment, the user can select a portion of the music file or the whole music file. Upon selection of an identifier of a music file (and of a portion), an identifier of the selected song is transmitted by the browsing unit 16 to the server 2 (with the start time of the selected portion and its duration) and the music file corresponding to the identifier of the song and its associated lyrics are transmitted from the server 2 to the browsing unit 16 via the first interface 17. As already explained, when a portion of song is selected by the user, only the relevant lyrics are sent by the remote server 2. Then, the lyrics and the music file are downloaded and stored in the music database 14. The retrieved lyrics can then be displayed on the display 12 in synchronization with the music file, which is played on the loudspeakers 15.

As the lyrics are displayed in synchronization with the played music file, the camera 11 is recording a scene, until the end of the music file. As already explained, only a portion of the music file can be selected by the user and, consequently, the camera is recording the scene until the end of the portion. This enables to select only favourite portions of a music file, such a chorus for example. Thanks to the lyrics displayed in synchronization with the played music file and because the camera 11 is frontal, the user can mime to sing the lyrics (or can sing them), while looking at the camera. A video file is thus obtained, which can be transmitted by the camera 11 to a generation unit 18, which is adapted to merge the video file with the music file that has been played. The generation unit 18 then obtains a final video, which frames are derived from the video file and which soundtrack is the music file. The quality level of the video is then increased compared to the devices of the prior art the soundtrack of the video is the music file and is not deteriorated by the ambient noise that would have been recorded during the LipDub. In addition, the generation of the final video is transparent to the user, which does not need to make it by himself with video software.

Once the final video has been generated, it can be shared on the Internet via a second interface 20. For example, the final video can be uploaded on a Youtube™ account of the user, so that the final video can be shared with individuals and groups of friends, or can be uploaded publicly on social networks such as Facebook™ or Twitter™. In addition, push notifications can be sent to the phones of other users of the LipDub application.

It is to be noted that, usually, Smartphones comprise an integrated microphone. However, according to the invention, when running the LipDub application, the microphone can be deactivated because the final video will be generated from the music file and from the recorded video without ambient sounds. Even if the microphone is activated, as the final video does not comprise the soundtrack of the recorded video (but the soundtrack of the music file), ambient noise will not deteriorate audio quality level of the final video.

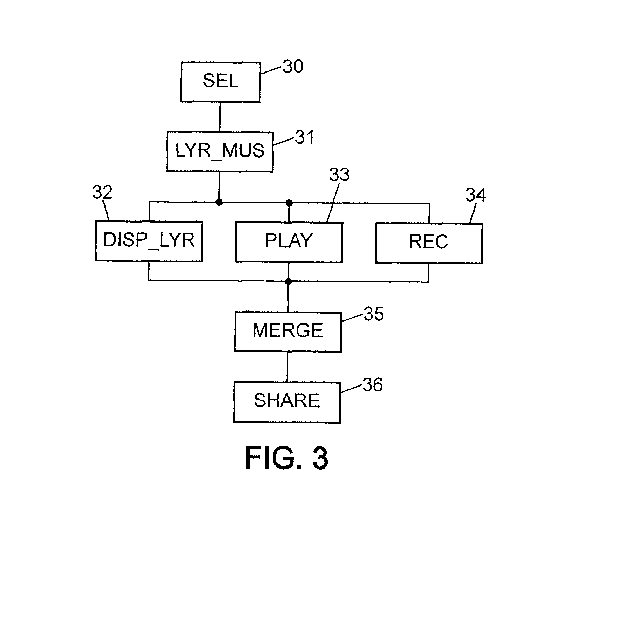

Referring now to Figure 3, there is shown a flowchart representing the steps of a method according to some embodiments of the invention.

At step 30, the user can select one of the identifier of the music files that are stored in the music database 14 or in the remote server 2. As already explained, the selected identifier can correspond to a portion of a music file, such as the chorus for example.

At step 31, the lyrics that are associated with the music files, which identifier has been selected, is retrieved by the browsing unit 16 from the remote server 2 with or without the music file (depending on what is already stored in the music database 14) or is retrieved from the music database 14, if the music database 14 already stores the music file and its associated lyrics.

At step 32, the retrieved lyrics can be displayed on the display 12. In parallel to step 32, the music file is played on the loudspeakers of the Smartphone 1, in synchronization with the displayed lyrics. While the music file is played, the camera 11 records the scene in its field of view at step 34.

When the music file has been played, the recorded video (which has been recorded with or without the sound of the microphone), can be merged with the music file at step 35, so that a final video is generated. The final video contains the frames of the recorded video and the soundtrack of the music file.

The final video can then be shared at step 36, via the second interface 20, as it has been previously explained.

The present invention enhances and simplifies the use of lipdubbing which is another way for people to communicate and which encourages users to converse. Indeed, such videos create a sense of intimacy between the sender and the recipient. It also enables to increase the value of the music files a user owns by uniquely mixing the music files with personalized videos. Further value is created by sharing their lipdub for the enjoyment of their friends.

In addition, LipDub allows labels and artists to monetise back catalogues of songs on a LipDub music store, as portions (for example the chorus) or even as karaoke lyrics. Thus, LipDub creates a market for the portions (excerpt) of a song. Indeed, previously, consumers would not have demanded portions of a song, whereas to record a LipDub, they are lead to select and buy a favourite portion. LipDub then generates demand for songs, song portions and song lyrics.

LipDub enables to combine the latest capabilities of Smartphones, such as front facing cameras and high quality video recording) with the historic trend of converging mobile phones and personal music devices. It also leverages a billing relationship of the user with a mobile network operator to facilitate micropayments for content, which were previously not monetised, such as lyrics or song portions. On top of this, users can express themselves in a way which combines the intimacy of user generated content with the quality and wider appeal of professional content.

## Claims

1. A method for generating a video, said method being implemented in a device (1) comprising a display (12) and a camera (11), said camera being oriented in a direction similar to a direction of the display, the device being adapted to display on said display at least one identifier of a music file, the method comprising:
- upon selection of an identifier of a music file, retrieving lyrics associated with the selected music file;
- displaying the retrieved lyrics on the display ;
- playing the music file in synchronization with the displayed lyrics;
- recording a video file while the music file is played; and
- generating a video by merging the captured video file with the music file.

2. The method according to claim 1, wherein the identifier of a music file is selected among a list of identifiers of music files that are stored on the device (1).

3. The method according to claim 1, wherein the identifier of a music file is selected among a list of identifiers of music files that are stored on a remote server (2).

4. The method according to claim 3, wherein the remote server (2) further stores lyrics in association with each of the stored music files and wherein retrieving lyrics associated to the selected music file comprises:
- sending the selected identifier of the music file to the remote server;
- receiving said music file from the remote sever;
- receiving lyrics associated with said music file from the remote server.

5. The method according to anyone of the preceding claims, wherein selection of an identifier of a music file comprises selecting a portion of said music file, wherein the retrieved lyrics are associated with said portion and wherein only the portion of the music file is displayed in synchronization with the displayed lyrics.

6. Computer program product recorded on a storage medium and executable by a computer in the form of a software agent including at least one software module setup to implement the method according to any one of claims 1 to 5.

7. A device for generating a video comprising a display (12), loudspeakers (15) and a camera (11), said camera being oriented in a direction similar to a direction of the display, the device being adapted to display on said display at least one identifier of a music file, and further comprising:
- a retrieving unit (14:16) for retrieving, upon selection of an identifier of a music file on the display, lyrics associated with the selected music file;
wherein the display is adapted to display the retrieved lyrics on the display, wherein the loudspeakers are adapted to play the music file in synchronization with the displayed lyrics, and wherein the camera is adapted to record a video file while the music file is played and the device further comprises a generating unit (18) for generating a video by merging the captured video file with the music file.

8. The device according to claim 7, wherein the retrieving unit (14;16) comprises a music database (14) storing a list of music files, and wherein the selected identifier of the music file is selected among a list of identifier of the stored music files.

9. The device according to claim 7, wherein the retrieving unit (14;16) comprises a browsing unit (16) for transmitting the selected identifier of the music file to a remote server (2) and wherein the lyrics and the music file are received by the retrieving unit (14;16) from the remote server.

10. The device according to anyone of claims 7 to 9, wherein the device (1) is a Smartphone and wherein the camera (11) is a front camera.

11. A system for generating a video comprising a remote server (2) and a device (1), said device comprising a display (12), loudspeakers (15) and a camera (11), said camera being oriented in a direction similar to a direction of the display, the device being adapted to display on said display at least one identifier of a music file, and the device further comprising:
- a retrieving unit (14;16) for retrieving from the remote server, upon selection of an identifier of a music file on the display, lyrics associated with the selected music file;
wherein the display is adapted to display the retrieved lyrics on the display, the loudspeakers are adapted to play the music file in synchronization with the displayed lyrics, and wherein the camera is adapted to record a video file while the music file is played and the device further comprises a generating unit (18) for generating a video by merging the captured video file with the music file.

12. The system according to claim 11, wherein the retrieving unit (14;16) comprises a music database (14) storing a list of music files, and wherein the selected identifier of the music file is selected among a list of identifier of the stored music files.

13. The system according to claim 11, wherein the remote server (2) further stores lyrics in association with each of the stored music files and wherein the retrieving unit (14;16) comprises a browsing unit (16) for transmitting the selected identifier of the music file to a remote server and wherein the remote server is adapted to retrieve the music file and its associated lyrics to the device.
